# FASCICULE DE BREVET EUROPEEN

(11) **EP 2 827 717 B1**
(45) Date de publication et mention de la délivrance du brevet: **08.03.2017**
(21) Numéro de dépôt: 13711659.6
(22) Date de dépôt: 20.03.2013
(51) Int. Cl.: A21C 11/10, A22C 7/00

(54) **PROCEDE ET MACHINE DE FABRICATION DE PORTIONS AVEC MOYENS D'EJECTION DESDITES PORTIONS**
VERFAHREN UND MASCHINE ZUR HERSTELLUNG VON TEILEN MIT MITTEL ZUM AUSWURF DIESER TEILE
METHOD AND MACHINE FOR THE PRODUCTION OF PORTIONS, INCLUDING MEANS FOR EJECTING SAID PORTIONS

(30) Priorité: 20.03.2012 FR 1252503
(43) Date de publication de la demande: 28.01.2015
(73) Titulaire: Marel France, 56150 Baud (FR)
(72) Inventeur: LE PAIH, Jacques, F-56930 Plumeliau (FR); VAN DEN NIEUWELAAR, Adrianus, NL-5421XG Gemert (NL); MEGGELAARS, Sigebertus, NL-5643 PM Eindhoven (NL); PIERRE, Yohann, 56700 Kervignac (FR)
(74) Mandataire: Novagraaf Technologies
(86) Numéro de dépôt international: PCT/EP2013/055813
(87) Numéro de publication internationale: WO 2013/139853

(56) Documents cités:
- EP-A1- 0 360 446
- EP-A2- 0 882 402
- DE-A1- 3 523 359
- US-A- 3 535 735
- US-A- 3 691 594
- US-A- 4 257 145

## Description

La présente invention concerne un procédé et un dispositif de fabrication de portions à partir d'au moins un boudin continu de produit alimentaire, en particulier de fabrication de boulettes de viande, comprenant un système de coupe particulier.

Il est connu, notamment par le document brevet EP 360 446, une machine de fabrication de portions sphériques ou boulettes, comportant un dispositif d'extrusion comprenant une tête d'extrusion délivrant en continu un boudin continu dans une direction verticale, un dispositif de mise en portions comprenant un système de coupe, ledit système de coupe comprenant des éléments de coupe aptes à être déplacés transversalement à ladite direction verticale entre une position ouverte dans laquelle le boudin passe entre lesdits éléments de coupe et une position fermée pour couper le boudin et former des portions de produit alimentaire, et un dispositif de récupération disposé en-dessous du dispositif mise en portions pour récupérer les portions.

Le système de coupe est de type diaphragme, les éléments de coupe sont montés circonférentiellement en contact glissant les uns par rapport aux autres. La tête d'extrusion est montée fixe au-dessus du système de coupe, ce dernier étant déplacé verticalement selon un mouvement de va-et-vient pour permettre la découpe du boudin défilant en continu. Le dispositif de récupération se présente sous la forme d'un convoyeur à bande sans fin pouvant transporter des barquettes dans une direction d'avancement, ledit convoyeur étant déplaçable transversalement à ladite direction d'avancement pour positionner automatiquement les boulettes dans les barquettes. Les boulettes découpées tombent par gravité dans les barquettes. Le produit alimentaire peut avoir tendance à coller aux éléments de coupe. La hauteur de chute peut ainsi varier d'une boulette à l'autre. La boulette peut par ailleurs coller à un élément de coupe, être déviée latéralement par ce dernier lorsque le système de coupe revient en position ouverte. Ces variations de hauteur de chute et ces phénomènes de collage, qui varient en fonction de la taille des portions et de la nature du produit alimentaire, limitent la cadence de production et ne garantissent pas un positionnement précis des boulettes dans les barquettes.

Le but de la présente invention est de proposer une solution visant à pallier les inconvénients précités, qui permette la fabrication de portions à partir d'un boudin à des cadences élevées, tout en permettant une mise en barquette automatique des portions.

A cet effet, la présente invention propose une machine de fabrication de portions de produit alimentaire, en particulier de boulettes de viande, suivant la revendication 1, comprenant
- un dispositif d'extrusion apte à délivrer, de préférence de manière continu, un boudin continu dans une direction verticale,
- un dispositif de mise en portions comprenant au moins un système de coupe, ledit système de coupe comprenant des éléments de coupe aptes à être déplacés transversalement à ladite direction verticale entre une position ouverte dans laquelle le boudin passe entre lesdits éléments de coupe et une position fermée pour couper le boudin et former des portions de produit alimentaire,
- et de préférence un dispositif de récupération disposé en-dessous du dispositif mise en portions pour récupérer les portions,
chaque système de coupe comprenant en outre des moyens d'éjection aptes à éjecter vers le bas les portions desdits éléments de coupe
caractérisée en ce que les moyens d'éjection comprennent au moins un canal inférieur apte à être mis en communication fluidique avec un fluide sous pression, en particulier un gaz sous pression, et notamment de l'air sous pression, pour l'injection de fluide sous pression, au moins lorsque les éléments de coupe sont en position fermée,
et en ce que les moyens d'éjection comprennent au moins un canal inférieur formé dans le corps d'un élément de coupe, ledit canal débouchant par un orifice inférieur sur une surface inférieure dudit élément de coupe.

Le dispositif de mise en portions comprend des moyens d'éjection pour éjecter les portions des éléments de coupe au moins lorsque ces derniers sont en position fermée. Les portions ne tombent plus par simple gravité, vers le dispositif de récupération. Ces moyens d'éjection limitent, voire suppriment les phénomènes de collage des portions aux éléments de coupe. Les moyens d'éjection permettent un transfert plus rapide des portions vers le dispositif de récupération, en particulier vers des barquettes de conditionnement, augmentant ainsi la cadence de la machine, notamment dans le cas de portions de petites tailles. En outre, dans le cas de conditionnement de portions de type boulettes directement dans des barquettes, cette éjection des portions assure un meilleur positionnement des portions dans les barquettes, en particulier dans les alvéoles de barquettes.

Selon un mode de réalisation plusieurs éléments de coupe du système de coupe, de préférence tous lesdits éléments de coupe, comprennent chacun au moins un canal inférieur, de préférence plusieurs canaux inférieurs.

Selon un mode de réalisation, chaque système de coupe comprend au moins un canal d'injection supérieur formé dans le corps d'un élément de coupe, ledit canal débouchant par un orifice supérieur sur une surface supérieure dudit élément de coupe et étant apte à être mis en communication fluidique avec un fluide sous pression, en particulier un gaz sous pression, et notamment de l'air sous pression, pour l'injection de fluide sous pression par ledit orifice supérieur, au moins lorsque les éléments de coupe sont en position fermée. Cette injection de fluide permet de limiter, voire supprimer, les risques de collage du boudin aux surfaces supérieures des éléments de coupe du système de coupe.

Selon un mode de réalisation, le système de coupe comprend au moins trois éléments de coupe disposés circonférentiellement, et agencés en contact glissant les uns par rapport aux autres pour former entre eux un passage central, lesdits éléments de coupe étant aptes à être déplacés horizontalement, transversalement à la direction d'avancement du boudin, entre la position ouverte et la position fermée pour progressivement fermer et ouvrir ledit passage afin de former lesdites portions.

Selon un mode de réalisation, lesdits éléments de coupe comprennent des surfaces inclinées inférieures, de préférence concaves, formant en position fermée une empreinte de formage inférieure.

Selon un mode de réalisation, chaque canal inférieur débouche par un orifice sur la surface inférieure inclinée d'un élément de coupe.

Selon un mode de réalisation, les éléments de coupe comprennent des surfaces inclinées supérieures, de préférence concaves, formant en position fermée une empreinte de formage supérieure, chaque canal supérieur débouche de préférence par un orifice sur la surface supérieure inclinée d'un élément de coupe.

Selon un mode de réalisation, le dispositif d'extrusion comprend au moins une tête d'extrusion apte à délivrer en continu un boudin continu dans une direction verticale, la ou les têtes d'extrusion sont montées mobiles verticalement selon un mouvement de va-et vient entre une position basse et une position haute, le mouvement en va-et-vient desdites têtes d'extrusion et le mouvement des éléments de coupe entre leur position fermée et leur position ouverte étant synchronisés, de sorte que les têtes d'extrusion sont en position basse lorsque les systèmes de coupe sont en position ouverte, la vitesse de déplacement des têtes de la position basse à la position haute étant sensiblement égale à la vitesse d'extrusion des boudins.

Le déplacement en va-et-vient des têtes et l'utilisation de systèmes de coupe fixes en position verticale permet de placer les éléments de coupe au plus près du dispositif de récupération et de garantir une hauteur de chute précise et réduite des portions.

Selon un mode de réalisation, le dispositif de mise en portions comprend en outre des moyens de guidage disposés sous chaque système de coupe pour guider la chute verticale de chaque portion éjectée des éléments de coupe. Ces moyens de guidage permettent de placer avec plus de précision les portions dans les barquettes, notamment dans les alvéoles de barquettes.

Selon un mode de réalisation, la machine comprend en outre un dispositif de récupération disposé en-dessous du dispositif mise en portions pour récupérer les portions, ledit dispositif de récupération comprend de préférence un convoyeur apte à recevoir sur son brin supérieur des barquettes pour la réception des portions, et à transporter lesdites barquettes dans une direction d'avancement.

Selon un mode de réalisation, le dispositif d'extrusion comprend au moins deux têtes d'extrusion, de préférence au moins trois têtes d'extrusion, aptes à délivrer chacune en continu un boudin continu dans une direction verticale, les axes principaux verticaux desdites têtes d'extrusion sont décalés l'un de l'autre transversalement, dans la direction transversale qui est perpendiculaire à la direction d'avancement du convoyeur, ledit dispositif de mise en portions comprenant un système de coupe associé à chaque tête d'extrusion, centré par rapport à l'axe principal de la tête d'extrusion, lesdits systèmes de coupe étant décalés les uns des autres transversalement dans la direction transversale perpendiculaire à la direction d'avancement du convoyeur, de sorte que chaque ensemble formé d'une tête et d'un système de coupe soit utilisé pour former les portions d'une rangée de portions dans les barquettes.

Pour des raisons d'encombrement des systèmes de coupe, et pour assurer un faible écartement transversal entre les boulettes dans les barquettes, les axes principaux des têtes d'extrusion et leurs systèmes de coupe associés sont de préférence décalés longitudinalement 1' un de l'autre dans la direction d'avancement du convoyeur. Selon un mode de réalisation, ledit convoyeur fonctionne pas à pas.

La présente invention a également pour objet un ensemble suivant la revendication 12, l'ensemble comprenant une machine telle que définie précédemment, et des barquettes de conditionnement, chaque barquette comprenant des alvéoles disposées en rangées pour la réception des portions, lesdites barquettes étant disposées sur le convoyeur de sorte que les rangées d'alvéoles soient disposées longitudinalement parallèlement à la direction d'avancement du convoyeur, les alvéoles d'une même rangée recevant les portions découpées par un même système de coupe. De préférence, chaque barquette comprend des bossages aptes à guider les portions vers les alvéoles lors de leur chute.

La présente invention a également pour objet un procédé de fabrication de portions de produit alimentaire, en particulier de boulettes de viande, suivant la revendication 13, comprenant
a) la fabrication d'au moins un boudin continu de produit alimentaire, en faisant pendre librement, sensiblement verticalement, au moins la partie d'extrémité dudit boudin, ladite partie d'extrémité défilant de préférence en continu verticalement,
b) la mise en portions dudit boudin par réalisation de découpes de ladite partie d'extrémité pendante, par des éléments de coupe, de manière à former des portions se séparant du boudin,
caractérisé en ce que l'étape de mise en portions comprend le fait de pousser vers le bas chaque portion découpée par injection d'un fluide sous pression réalisée par des moyens d'éjection comprennent au moins un canal inférieur formé dans le système de coupe, ledit canal débouchant par un orifice inférieur sur une surface inférieure dudit système de coupe, afin d'éjecter les portions desdits éléments de coupe, lesdites portions se séparant du boudin par gravité et par cette opération de poussée supplémentaire, ladite poussée vers le bas étant de préférence obtenue au moyen d'un ou plusieurs flux de fluide.

Selon un mode de réalisation, chaque portion coupée et poussée est guidée verticalement vers le bas, par des moyens de guidage.

Selon un mode de réalisation, les portions découpées et poussées sont récupérées pour être chargées dans des barquettes de conditionnement.

Selon un mode de réalisation, chaque portion découpée et poussée est récupérée dans une barquette de conditionnement, de préférence dans une alvéole d'une barquette à alvéoles, chaque alvéole recevant une seule portion.

Selon un mode de réalisation, le procédé comprend la fabrication de plusieurs boudins continus de produit alimentaire, les parties d'extrémité desdits boudins pendant librement, sensiblement verticalement, en étant décalées les unes des autres perpendiculairement à une direction d'avancement de barquettes de sorte que les portions soient disposées en rangées dans les barquettes, les portions d'une même rangée dans une barquette étant obtenue par découpe du même boudin.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la figure 1 est une vue en perspective d'une machine de fabrication de portions selon l'invention ;
- la figure 2 est une vue agrandie de dessus de la machine de la figure 1, sans le poussoir du dispositif d'extrusion ;
- la figure 3 est une vue de côté de la machine de la figure 2 ;
- les figures 4 et 5 sont deux vues partielles agrandies en perspective de la machine de la figure 1, illustrant les têtes d'extrusion et les systèmes de coupe ;
- les figures 6A et 6B sont deux vues partielles de côté de la machine de la figure 1 illustrant les têtes d'extrusion, respectivement en position basse et en position haute ;
- les figures 7A et 7B sont deux vues de dessus des systèmes de coupe de la machine de la figure 1, respectivement en position ouverte et en position fermée, en l'absence des têtes et de la plaque support supérieure sur la figure 7A, et en l'absence des têtes sur la figure 7B ;
- la figure 8 est une vue en éclaté des différents éléments constitutifs d'un système de coupe,
- les figures 9 et 10 sont respectivement une vue agrandie de dessus et une vue en perspective d'un élément de coupe du système de coupe de la figure 8 ;
- la figure 11 est une vue en coupe selon le plan XI-XI de la figure 9 ;
- la figure 12 est une vue de dessous d'un système de coupe en position fermée ;
- la figure 13 est une vue en perspective des éléments de coupe d'un système de coupe selon une variante de réalisation ;
- la figure 14 est une vue en perspective agrandie d'un élément de coupe de la figure 13, en l'absence de l'insert formant les canaux inférieurs et les canaux supérieurs ;
- les figures 15 et 16 sont respectivement une vue en perspective et de côté d'un insert d'un élément de coupe de la figure 14 ;
- les figures 17A et 17B sont des vues en perspective et en coupe d'une portion sphérique pouvant être obtenue avec une machine selon l'invention ;
- les figures 18A et 18B sont des vues en perspective et en coupe d'une portion allongée pouvant être obtenue avec une machine selon l'invention ; et,
- les figures 19A et 19B sont des vues en perspective et en coupe d'une autre portion pouvant être obtenue avec une machine selon l'invention.

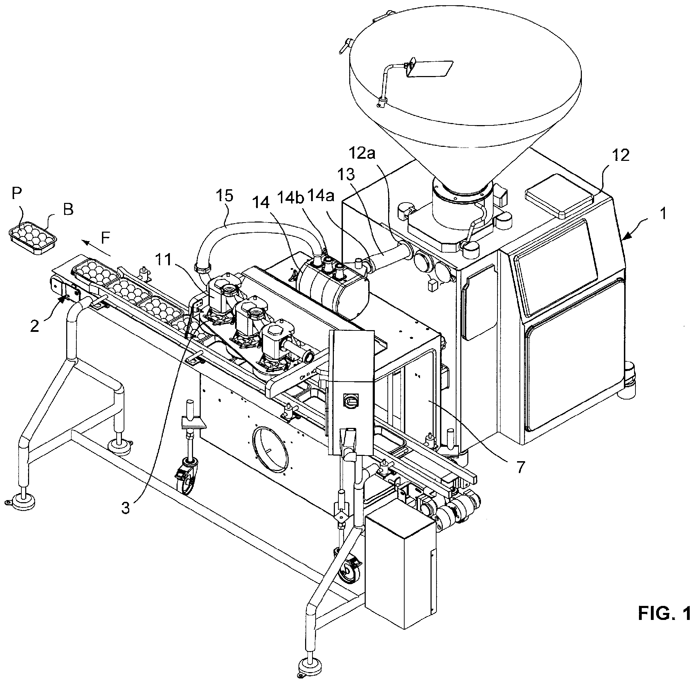

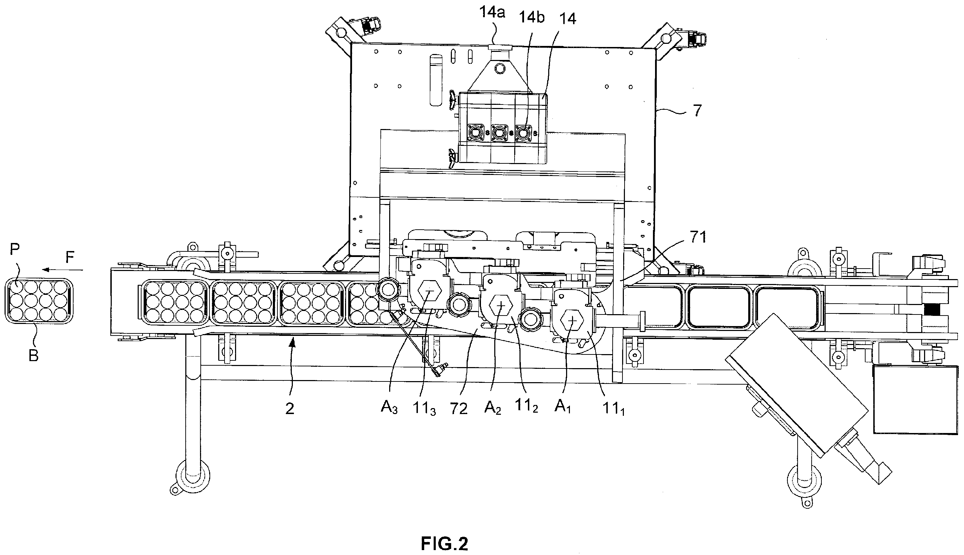

La machine illustrée sur les figures est destinée à la fabrication de portions de type boulettes à partir de trois boudins continus, ladite machine permettant une mise en barquette automatique des boulettes. En référence aux figures 1, 2 et 3, la machine comprend un dispositif 1 d'extrusion, un dispositif de mise en portions et un dispositif 2 de récupération, appelé également dispositif de conditionnement ou de mise en barquette. Dans le présent mode de réalisation, le dispositif d'extrusion 1 comprend trois têtes ou buses d'extrusion 11, référencées individuellement 11₁, 11₂, 11₃, d'axe principal vertical A₁, A₂, A₃ pour l'extrusion en continu de trois boudins cylindriques. Le dispositif de mise en portion comprend trois systèmes de coupe 3, référencés individuellement 3₁, 3₂, 3₃, un système de coupe étant disposé en dessous chaque tête d'extrusion. Le dispositif de conditionnement comprend un convoyeur à bande sans fin disposé sous les systèmes de coupe et destiné à transporter sur son brin supérieur des barquettes B dans une direction F d'avancement sensiblement horizontale.

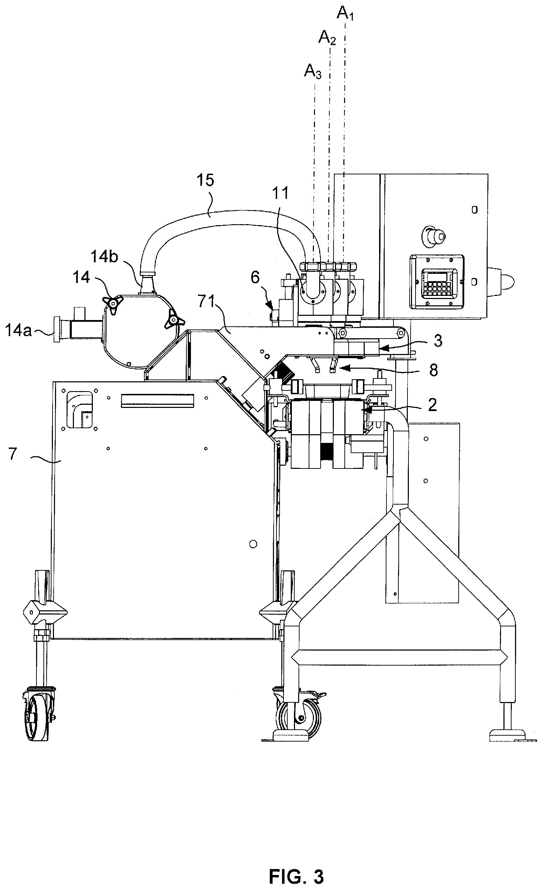

Le dispositif d'extrusion comprend un poussoir 12, connu en soi, permettant de délivrer par une sortie 12a un flux continu de produit alimentaire, par exemple un flux de viande hachée. La sortie 12a est connectée au moyen d'un tuyau 13, par exemple flexible, à l'entrée 14a d'un répartiteur 14. Le répartiteur, connu en soi, répartit de manière égale sur trois sorties 14b le flux de produit alimentaire entrant. Le répartiteur est monté sur un châssis 7 support. Une tête d'extrusion 11 est connectée à chaque sortie 14b au moyen d'un tuyau flexible, représenté schématiquement sous la référence 15 sur les figures 1 et 3 entre une sortie du répartiteur et la buse référencée 11₃. Les têtes sont montées mobiles en translation verticale sur le châssis support, en porte à faux au-dessus du convoyeur. En référence aux figures 3, 4 et 5, le châssis comprend deux bras 71 en porte-à-faux, entre lesquels est montée une plaque supérieure 72. Chaque tête est montée coulissante sur un support 73 de tête assemblée sur la plaque 72. Le support 73 comprend deux montants 73a latéraux assemblés de part et d'autre d'une base 73b par laquelle le support est assemblé à la plaque. Lesdits montants présentent des nervures coulissant dans des gorges correspondantes du corps 110 de la tête. Chaque tête est montée coulissante au dessus d'une ouverture 72a circulaire de la plaque. Les têtes sont montées de sorte que leurs axes principaux A₁, A₂, A₃ soient décalés les uns des autres d'une part dans la direction F, et d'autre part la direction horizontale perpendiculaire à la direction F.

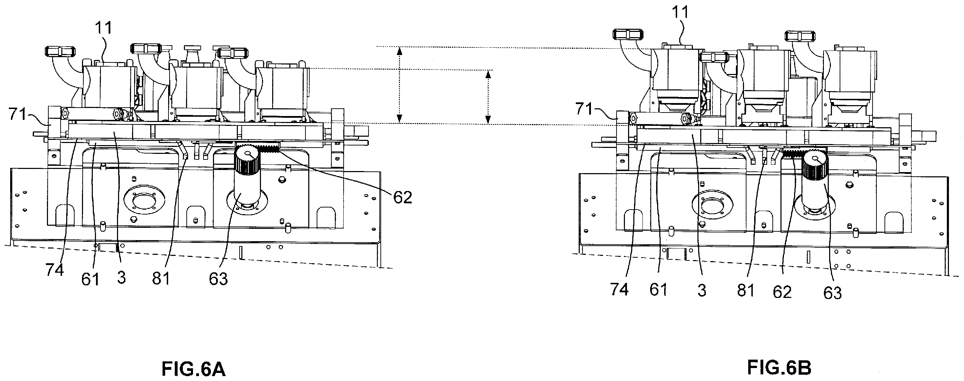

Un système d'actionnement 6 permet de déplacer simultanément les trois têtes selon un mouvement de va-et-vient vertical entre une position basse illustrée à la figure 6A et une position haute illustrée à la figure 6B. Ce système d'actionnement comprend une barre 61 d'actionnement montée mobile en translation horizontale, parallèlement à la direction d'avancement, entre les deux bras 71. La barre est munie d'une crémaillère 62 engrenant avec le pignon d'un moteur 63. Chaque tête est munie d'un pion 64 d'actionnement disposé perpendiculairement à la direction F et coulissant dans une fente verticale de la base 73b du support de tête. Un levier 65 en L est monté pivotant sur la base 73b autour d'un axe perpendiculaire à la direction F. Un premier bras du levier 65 présente en extrémité une lumière oblongue dans laquelle passe le pion 64 d'actionnement de la tête, et son deuxième bras est connecté via un pion à la barre 61. Le déplacement horizontal en va-et-vient de la barre par le moteur 63 entraîne, via les leviers, le déplacement vertical en va-et-vient des têtes. Le moteur est apte à être commandé pour déplacer la barre entre position droite, illustrée à la figure 6A dans laquelle les têtes sont dans une position basse, et une position gauche, illustrée à la figure 6B, dans laquelle les têtes sont en position haute.

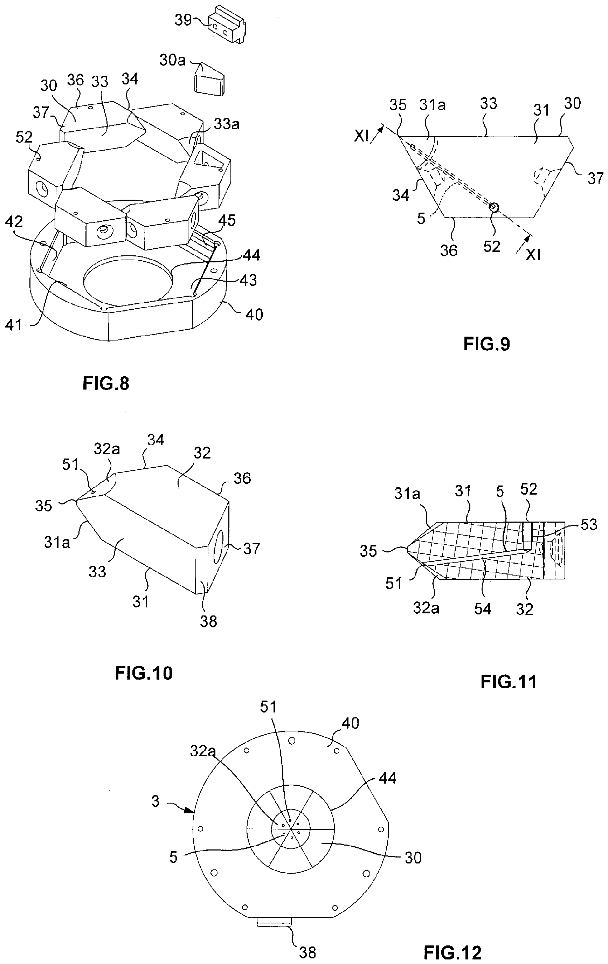

A chaque tête d'extrusion 3 est associé un système de coupe 3 pour couper en portion le boudin continu délivré par ladite tête. Chaque système de coupe est un système de type diaphragme, présentant un passage central se fermant et s'ouvrant progressivement. En référence aux figures 8 à 11, chaque système de coupe 3 comprend ici six éléments 30 de coupe montés en contact glissant les uns par rapport aux autres dans le logement 41 d'un boîtier 40 support. Chaque élément de coupe est formé d'un corps ayant une forme générale d'hexaèdre, comprenant une surface supérieure 31 et une surface inférieure 32, parallèles entre elles et globalement trapézoïdales, et quatre surface latérales verticales. Parmi ces quatre surfaces latérales, une première surface et une deuxième surface adjacentes, dites de glissement intérieures 33, 34 se rejoignent le long d'une arête 35. Une première surface extérieure 36 forme une arête avec la deuxième surface 34 de glissement intérieure et s'étend parallèlement à la première surface 33 de glissement intérieure. La deuxième surface 37 extérieure, dite de glissement extérieure, forme une arête avec la surface extérieure et rejoint la première surface de glissement intérieure, éventuellement via une arête 38 chanfreinée.

Le logement 41 présente une paroi latérale 42 hexagonale et une paroi de fond 43 munie d'une ouverture 44 circulaire centrale traversante. Les éléments de coupe sont montés dans le logement du boitier, chaque élément de coupe est en contact glissant par sa surface inférieure 32 contre la paroi de fond 43 du logement, et par sa surface de glissement extérieure 37 contre un pan de la paroi latérale 42. Les éléments de coupe sont en contact glissant les uns avec les autres par leurs surfaces de glissement intérieures 33, 34, chaque élément de coupe étant en contact par sa première surface de glissement intérieure avec la deuxième surface de glissement intérieure d'un élément adjacent et par sa deuxième surface de glissement intérieure avec la première surface de glissement intérieure de l'autre élément adjacent.

Dans une position dite ouverte du système de coupe, tel qu'illustrée à la figure 6A, les éléments de coupe sont en contact contre la paroi du logement par leurs surfaces extérieures 36, 37, un passage central est formé par les parties exposées des premières surfaces 33 de glissement intérieures des éléments de coupe. Le passage présente dans cette position ouverte une section suffisante pour que le boudin extrudé puisse passer, sans contact avec les éléments de coupe.

Le coulissement des éléments de coupe le long des pans de la paroi latérale du logement entraîne une réduction progressive du passage central jusqu'à la fermeture dudit passage dans une position dite fermée du système de coupe, illustrée aux figures 6B et 12, dans laquelle les éléments de coupe viennent sensiblement en contact les uns avec les autres par leur arête 35. La manoeuvre du système de coupe de la position fermée à la position ouverte est réalisée par déplacement le long de la paroi latérale d'un des éléments de coupe, appelé élément de coupe moteur, au moyen d'un pion d'actionnement 39 fixé sur la surface de glissement extérieure, au moyen de vis vissées dans un insert 30a, logé dans un logement dudit élément de coupe, ledit pion coulissant dans une fente 45 de la paroi latérale du logement du boitier. Le coulissement via le pion dudit élément de coupe moteur entraine le coulissement des autres éléments de coupe.

Dans le présent mode de réalisation, chaque élément de coupe est conformé en pointe en direction de son arête 35. Le coin formé par les deux surfaces de glissement intérieures 33, 34 et la surface supérieure 31 est coupé pour former une surface inclinée supérieure 31a. De même, le coin formé par les deux surfaces de glissement intérieure 33, 34 et la surface inférieure 32 est coupée pour former une surface inclinée inférieure 32a. Ces surfaces inclinées inférieures et supérieures présentent ici une forme concave, de sorte qu'en position fermée, les surfaces inclinées inférieures forment une empreinte inférieure à surface semi-sphérique ou à surface de segment sphérique, et les surfaces inclinées supérieures forment une empreinte à surface semi-sphérique ou de segment sphérique. Chaque élément de coupe présente ainsi une arête 35 de hauteur réduite par rapport à la hauteur de l'élément de coupe qui est définie entre la surface supérieure et la surface inférieure. Ces éléments de coupe avec une portion en forme de pointe permettent un pincement plus progressif du boudin en fin de fermeture du passage central et un formage des portions.

Les systèmes de coupe 3 sont assemblés à la plaque supérieure 72, contre la surface inférieure de cette dernière. Pour leur montage, les systèmes de coupe sont montés par exemple via des vis entre la plaque supérieure et une plaque inférieure 74, l'ensemble étant fixé aux bras via la plaque inférieure. Chaque système de coupe est centré par rapport à l'axe principal d'une tête, une ouverture 72a de la plaque supérieure, ainsi qu'une et une ouverture de la plaque inférieure. Les systèmes de coupe 3 et les têtes 11 sont déplacées en synchronisme, de sorte que les systèmes de coupe soient en position ouverte lorsque les têtes sont en position basse, et en position fermée lorsque les têtes sont en position haute. Les systèmes de coupe sont ici déplacés entre leurs deux positions au moyen du système d'actionnement 6 utilisé pour le déplacement des têtes, les pions 39 des éléments de coupe moteur des trois systèmes de coupe étant assemblés à la barre 61 d'actionnement précitée.

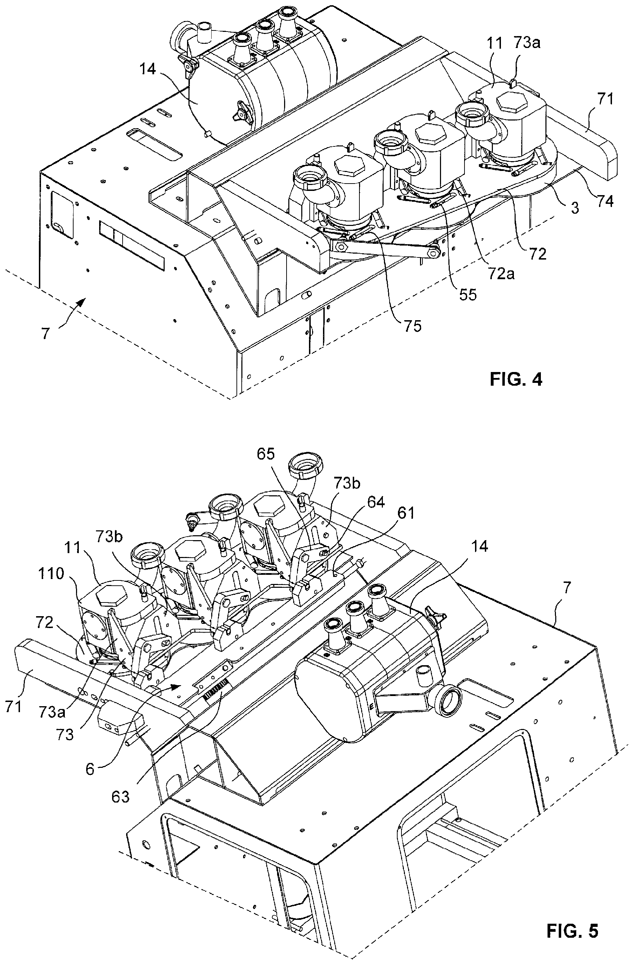

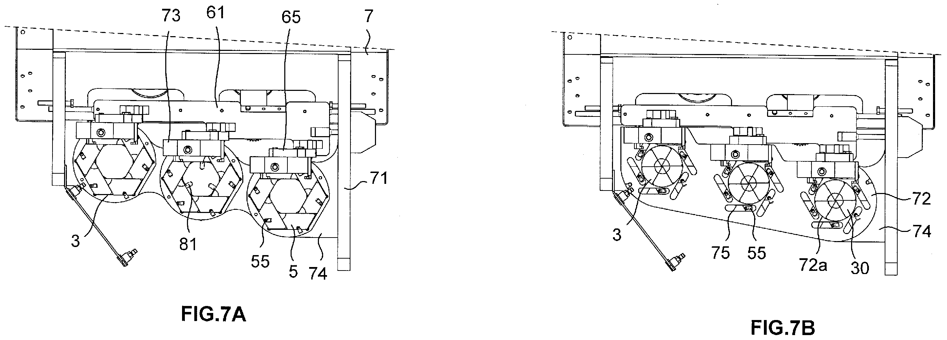

Selon l'invention, chaque système de coupe comprend en outre des moyens d'éjection permettant d'éjecter vers le bas les portions lorsque les systèmes de coupe sont en position fermée. Ces moyens d'éjection sont ici de type pneumatique, et comprennent des canaux 5 d'injection dits canaux inférieurs formés dans les éléments de coupe. En référence aux figures 9 à 12, chaque élément de coupe comprend un canal 5 débouchant par orifice inférieur 51 sur la surface inclinée 32a inférieure concave et débouchant par un orifice de connexion 52 sur la surface supérieure 31. Le canal comprend un premier tronçon 53 s'étendant depuis l'orifice de connexion 52, perpendiculairement à la surface supérieure, et se prolongeant par un second tronçon 54 jusqu'à la surface inclinée inférieure. En référence en particulier aux figures 4 et 7B, l'orifice de connexion est connecté à un système d'injection d'air (non représenté) par un tuyau flexible (non représenté), cette connexion étant réalisée au moyen d'un connecteur 55 (Fig.4). Pour permettre le déplacement des éléments de coupe, la plaque supérieure est munie de fentes 75 dans lesquelles coulissent les connecteurs.

Le système d'injection d'air est apte à injecter de l'air dans lesdits canaux 5, via les tuyaux flexibles, lorsque les systèmes de coupe sont en position fermée, pour former un flux d'air sortant des orifices inférieurs. Selon un mode de réalisation, cette injection d'air commence juste avant que les systèmes de coupe aient atteint leur position fermée, et s'interrompt juste après que les systèmes de coupe aient commencé à retourner vers leur position ouverte.

Dans le présent mode de réalisation, ledit second tronçon 54est incliné et forme un angle non nul par rapport à l'horizontale, de sorte que le flux d'air sortant du canal soit orienté vers le bas, le tronçon formant par exemple un angle d'environ 10° par rapport à l'horizontale.

Un système de guidage est en outre en outre prévu sous chaque système de coupe pour guider les portions lors de leur chute. Les figures 3, 6A et 7A illustrent un système de guidage 8 associé à un système de coupe. Ce système de guidage comprend des tiges 81 cylindriques, par exemple au nombre de trois, s'étendant vers le bas depuis le système de coupe en se rapprochant les unes des autres pour former entre elle un passage centré selon l'axe principal de la tête associée au système de coupe, et dont la section diminue de haut en bas. Les tiges sont disposées à espace angulaire régulier et comprennent un tronçon incliné s'étendant depuis le système de coupe en se rapprochant de l'axe principal et un tronçon vertical parallèle à l'axe principal, la section du passage au niveau de ces tronçons correspondant sensiblement à la section au diamètre du boudin.

Le convoyeur 2 comprend une bande sans fin, sur le brin supérieur de laquelle sont positionnées des barquettes, les unes derrière les autres. Dans le présent mode de réalisation, les barquettes comprennent trois rangées de boulettes, les rangées étant parallèles à la direction d'avancement. Chaque système de coupe associé à une tête d'extrusion forme les boulettes pour une rangée de la barquette.

De préférence, les barquettes sont des barquettes à alvéoles, chaque alvéole étant destinée à recevoir une boulette. La barquette présente des bossages séparant les alvéoles les unes des autres, lesdits bossages servant à guider les boulettes vers les alvéoles lors de leur chute et également au maintien des boulettes dans les alvéoles lorsque les barquettes sont commercialisées, après operculage, dans une position inclinée à sensiblement 45°.

En fonctionnement, chaque tête extrude verticalement en continu un boudin de produit alimentaire.

Les têtes étant en position basse, et les systèmes de coupe en position ouverte, les boudins passent par le passage central des systèmes de coupe et s'étendent au delà desdits systèmes de coupe. Les systèmes de coupe sont déplacés par le système d'actionnement 6 vers leur position fermée pour pincer progressivement les boudins. Simultanément, les têtes sont déplacées vers leur position haute de sorte que la vitesse d'avancement du boudin en contact avec les systèmes de coupe soit nulle. Juste avant que les systèmes de coupe aient atteint leur position fermée, de l'air est injecté dans les canaux inférieurs. Les boulettes formées sont ainsi éjectées des empreintes inférieures. Les boulettes éjectées des systèmes de coupe sont guidées par les systèmes de guidage 8 dans les alvéoles vides des barquettes. Les systèmes de coupe sont déplacés vers leur position ouverte et simultanément les têtes sont ramenées en position basse, afin de faire passer les boudins dans les passages centraux de sorte qu'ils s'étendent sous les systèmes de coupe pour former les boulettes suivantes. Simultanément, les barquettes sont avancées d'un pas par le convoyeur pour placer sous les systèmes de coupe les alvéoles vides suivantes des rangées à remplir des barquettes. L'injection d'air dans les canaux est de préférence stoppée lors de ce déplacement des systèmes de coupe de la position fermée vers la position ouverte.

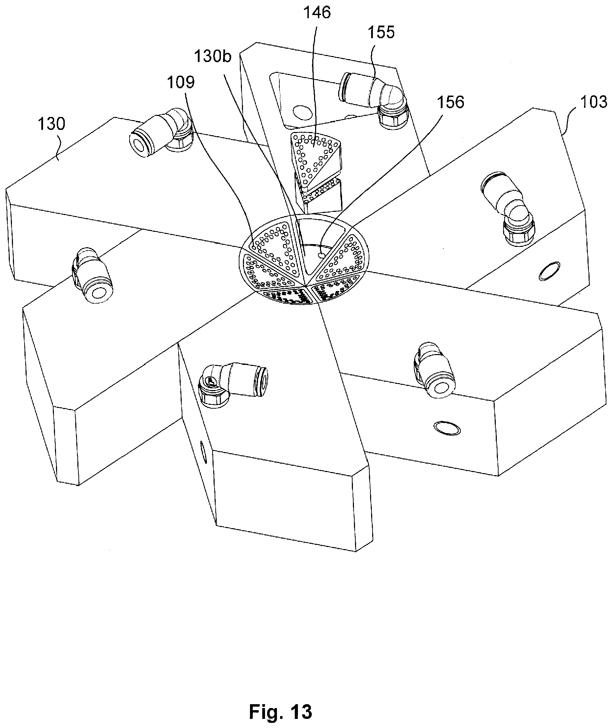

La figure 13 illustrent les éléments de coupe 130 d'un système de coupe 103 selon une variante de réalisation, pouvant être utilisé dans la machine décrite précédemment à place des systèmes de coupe 3. Comme précédemment, le système de coupe 103 comprend des éléments 130 de coupe montés en contact glissant les uns par rapport aux autres dans le logement d'un boîtier support (non représenté).

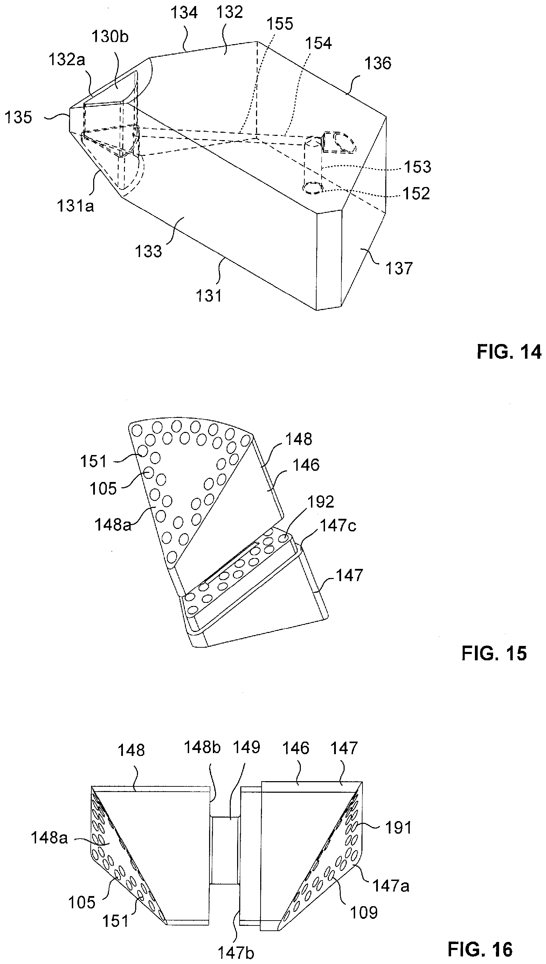

En référence aux figures 13 à 16, chaque élément de coupe est formé d'un corps ayant une forme générale d'hexaèdre, comprenant une surface supérieure 131 et une surface inférieure 132, une première surface de glissement intérieure 133 et deuxième de glissement intérieure 134 se rejoignent le long d'une arête 135, une première surface extérieure 136, et une deuxième surface 137 de glissement extérieure. Chaque élément de coupe présente également une surface inclinée supérieure 131a concave et une surface inclinée inférieure 132a concave. La manoeuvre du système de coupe entre sa position fermée et sa position ouverte est réalisé via un élément de coupe moteur, comme précédemment.

Chaque élément de coupe comprend ici plusieurs canaux 105 d'injection dit inférieurs, débouchant par des orifices inférieurs 151 sur la surface inclinée inférieure 132a pour l'éjection des portions, ainsi que plusieurs canaux d'injection dit supérieurs 109 débouchant par des orifices supérieurs 191 sur la surface inclinée supérieure 131a pour former un coussin d'air au niveau de ladite surface inclinée supérieure et éviter que le boudin ne colle à ladite surface, notamment lors de l'ouverture du passage central.

Les canaux supérieurs 109 et inférieurs 105 sont formés dans un insert 146 logé dans un logement 130b débouchant sur la surface inclinée supérieure 131a et sur la surface inclinée inférieure 132a. L'insert 146 comprend une partie supérieure 147, présentant une surface extérieure 147a concave et une surface interne 174b, une partie inférieure 148 présentant une surface extérieure 148a concave et une surface interne 148b, et une partie centrale 149 reliant la partie supérieure et la partie inférieure entre elles par leurs surfaces internes 147b, 148b. Les canaux supérieurs 109 sont formés dans la partie supérieure 147, et débouchent sur sa surface interne 147a par des orifices 192 et sur sa surface extérieure 147a par les orifices supérieurs 191. Les canaux inférieurs 105 sont formés dans la partie inférieure 148, en débouchant sur sa surface interne 148b par des orifices (non visibles), et sur sa surface extérieure 148a par les orifices inférieurs 191. Lorsque l'insert 146 est logé dans son logement 130b, les surfaces extérieures 147a, 148a des parties supérieures et inférieures forment une surface concave continue respectivement avec la surface inclinée supérieure 131a et la surface inclinée inférieure 132a, et les canaux supérieurs et inférieurs sont disposés perpendiculairement aux surfaces supérieure et inférieure de l'élément de coupe. Pour le maintien vertical de l'insert, la partie supérieure 147 comprend un épaulement 147c venant en appui contre un épaulement du logement 130b.

Ces canaux supérieurs et inférieurs sont alimentés en air par un même canal dit principal 155. Le canal principal 155 débouche par un orifice de connexion 152 sur la surface supérieure et par un orifice 156 (Fig. 13) dans le logement 130b, ledit orifice étant disposé entre les surfaces internes 147b, 148b de l'insert. Le canal principal comprend un premier tronçon 153 s'étendant depuis l'orifice de connexion 152, perpendiculairement à la surface supérieure, et se prolongeant par un second tronçon 154 jusqu'au logement 130b. L'orifice de connexion est équipé d'un connecteur 155 pour sa connexion à un système d'injection d'air au moyen d'un tuyau flexible.

Une fois montés dans leur boîtier, les éléments de coupe présentent des canaux inférieurs 105 et supérieurs 109 disposés verticalement, permettant respectivement de créer des flux d'air verticaux vers le bas pour éjecter les portions et des flux d'air verticaux vers le haut pour éviter que le boudin ne colle aux éléments de coupe.

Le système d'injection d'air est apte à injecter de l'air dans lesdits canaux inférieurs et supérieurs, via le canal principal, lorsque les systèmes de coupe sont en position fermée. L'injection d'air commence juste avant que les systèmes de coupe aient atteint leur position fermée, et s'interrompt juste après que les systèmes de coupe aient commencé à retourner vers leur position ouverte.

Selon une variante de réalisation, l'insert 146 munis de canaux supérieurs et inférieurs est remplacé par un insert en matériau poreux, par exemple en plastique ou métal fritté, notamment en inox fritté, autorisant le passage de fluide.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

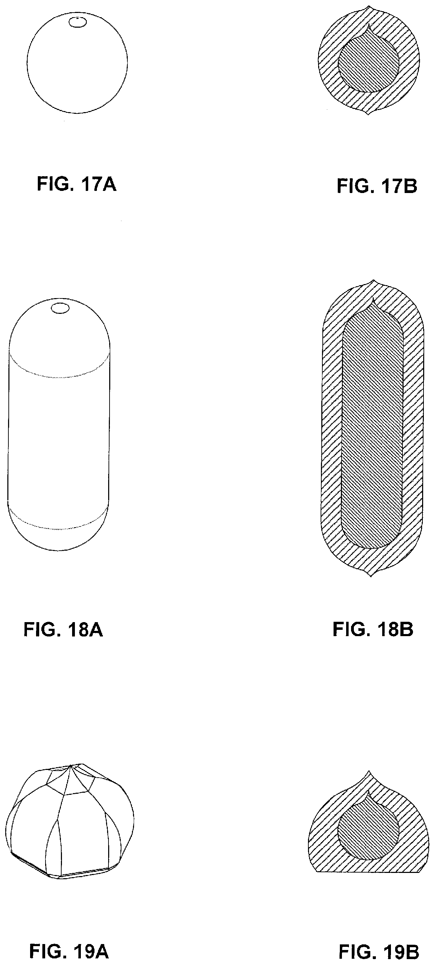

La machine selon l'invention peut également être utilisée pour la fabrication de portions fourrées comprenant une couche extérieure d'un matériau principal entourant une couche interne d'un matériau de garniture, les têtes d'extrusion comprenant deux entrées pour la coextrusion du matériau principal et du matériau de garniture. Dans le mode de réalisation illustré, les têtes d'extrusion comprennent une entrée latérale, et une entrée centrale fermée ici par un bouchon. Pour une coextrusion, le bouchon est retiré et un conduit est monté dans le passage principal du corps de tête. L'entrée latérale est alimentée comme précédemment par le poussoir 12 et le répartiteur 14, en matériau principal. Le conduit est alimenté en matériau de garniture via un deuxième poussoir associé à un deuxième répartiteur. La connexion du conduit à une sortie du répartiteur est également effectuée au moyen d'un conduit flexible pour permettre le déplacement des têtes d'extrusion verticalement en va-et-vient. Les figures 17A et 17B illustrent une telle portion fourrée sphérique, ou boulette fourrée, obtenue avec des têtes de coextrusion, et les systèmes de coupe illustrés sur les figures. Les figures 18A et 18B illustrent une portion fourrée allongée qui peut également être obtenue les systèmes de coupe illustrés sur les figures, en temporisant par exemple le retour des têtes de coextrusion vers leur position haute lorsqu'elles sont en position basse, de manière à obtenir des portions plus longues. Les figures 19A et 19B illustrent une portion fourrée pouvant être obtenue avec des systèmes de coupe comprenant des éléments de coupe dont les portions inclinées inférieures formant une empreinte inférieure de forme différente de celle illustrée sur les figures, et sans portions inclinées supérieures.

## Revendications

1. Machine de fabrication de portions de produit alimentaire, en particulier de boulettes de viande, comprenant
- un dispositif (1) d'extrusion apte à délivrer un boudin continu dans une direction verticale,
- un dispositif de mise en portions comprenant au moins un système de coupe (3, 103), ledit système de coupe comprenant des éléments de coupe (30, 130) aptes à être déplacés transversalement à ladite direction verticale entre une position ouverte dans laquelle le boudin passe entre lesdits éléments de coupe et une position fermée pour couper le boudin et former des portions (P) de produit alimentaire,
chaque système de coupe comprenant en outre des moyens d'éjection (5, 105) aptes à éjecter vers le bas les portions (P) desdits éléments de coupe, **caractérisée en ce que** les moyens d'éjection comprennent au moins un canal inférieur (5, 105) formé dans le corps d'un élément de coupe (30, 130), ledit canal débouchant par un orifice inférieur (51, 151) sur une surface inférieure (32a, 132a) dudit élément de coupe, et **en ce que** ledit au moins un canal inférieur (5, 105) est apte à être mis en communication fluidique avec un fluide sous pression, pour l'injection de fluide sous pression.

2. Machine selon la revendication 1, **caractérisée en ce que** chaque système de coupe comprend au moins un canal supérieur (109) formé dans le corps d'un élément de coupe (130), ledit canal débouchant par un orifice supérieur (191) sur une surface supérieure (132a) dudit élément de coupe et étant apte à être mis en communication fluidique avec un fluide sous pression, pour l'injection de fluide sous pression par ledit orifice supérieur.

3. Machine selon l'une des revendications 1 à 2, **caractérisée en ce que** le système de coupe (3, 103) comprend au moins trois éléments de coupe (30, 130) disposés circonférentiellement, et agencés en contact glissant les uns par rapport aux autres pour former entre eux un passage central, lesdits éléments de coupe étant aptes à être déplacés horizontalement, entre la position ouverte et la position fermée pour progressivement fermer et ouvrir ledit passage afin de former lesdites portions.

4. Machine selon la revendication 3, **caractérisée en ce que** lesdits éléments de coupe (30, 130) comprennent des surfaces inclinées inférieures (32a), formant en position fermée une empreinte de formage inférieure.

5. Machine selon la revendication 4
, **caractérisée en ce que**
chaque canal inférieur (5, 105) débouche par un orifice (51, 151) sur la surface inférieure inclinée (32a, 132a) d'un élément de coupe.

6. Machine selon la revendication 2
, **caractérisée en ce que** les
éléments de coupe comprennent des surfaces inclinées supérieures (51a, 151a), formant en position fermée une empreinte de formage supérieure, chaque canal supérieur (109) débouche par un orifice supérieur (191) sur la surface supérieure inclinée (131a) d'un élément de coupe.

7. Machine selon l'une des revendications 1 à 6, **caractérisée en ce que** le dispositif d'extrusion comprend au moins une tête d'extrusion (11) apte à délivrer en continu un boudin continu dans une direction verticale, la ou les têtes d'extrusion sont montées mobiles verticalement selon un mouvement de va-et vient entre une position basse et une position haute, le mouvement en va-et-vient desdites têtes d'extrusion et le mouvement des éléments de coupe entre leur position fermée et leur position ouverte étant synchronisés, de sorte que les têtes d'extrusion sont en position basse lorsque les systèmes de coupe sont en position ouverte.

8. Machine selon l'une des revendications 1 à 7, **caractérisée en ce que** le dispositif de mise en portions comprend en outre des moyens de guidage (8) disposés sous chaque système de coupe (3, 103) pour guider la chute verticale de chaque portion éjectée des éléments de coupe.

9. Machine selon l'une des revendications 1 à 8, **caractérisée en ce qu'**elle comprend en outre un dispositif de récupération (2) disposé en-dessous du dispositif de mise en portions pour récupérer les portions, ledit dispositif de récupération comprend un convoyeur apte à recevoir sur son brin supérieur des barquettes (B) pour la réception des portions, et à transporter lesdites barquettes dans une direction d'avancement (F).

10. Machine selon la revendication 9, caractérisée en en ce que le dispositif d'extrusion comprend au moins deux têtes d'extrusion (11) aptes à délivrer chacune en continu un boudin continu dans une direction verticale, les axes principaux (A₁, A₂, A₃) verticaux desdites têtes d'extrusion sont décalés l'un de l'autre transversalement, dans la direction transversale qui est perpendiculaire à la direction d'avancement (F) du convoyeur (2), ledit dispositif de mise en portions comprenant un système de coupe (3, 130) associé à chaque tête d'extrusion, lesdits systèmes de coupe étant décalés les uns des autres transversalement dans la direction transversale perpendiculaire à la direction d'avancement du convoyeur.

11. Machine selon la revendication 10, **caractérisée en ce que** les axe principaux (A₁, A₂, A₃) des têtes d'extrusion (11) et leurs systèmes de coupe (3, 130) associés sont décalés longitudinalement l'un de l'autre dans la direction (F) d'avancement du convoyeur.

12. Ensemble comprenant une machine selon l'une des revendications 9 à 11 et des barquettes (B) de conditionnement, chaque barquette comprenant des alvéoles disposées en rangées pour la réception d'une portion, lesdites barquettes étant disposées sur le convoyeur de sorte que les rangées d'alvéoles soient disposées longitudinalement parallèlement à la direction d'avancement (F) du convoyeur (2), les alvéoles d'une même rangée recevant les portions découpées par un même système de coupe.

13. Procédé de fabrication de portions de produit alimentaire comprenant
a) la fabrication d'au moins un boudin continu de produit alimentaire, en faisant pendre librement, sensiblement verticalement, la partie d'extrémité dudit boudin,
b) la mise en portions dudit boudin par réalisation de découpes de ladite partie d'extrémité pendante, de manière à former des portions se séparant du boudin, à l'aide d'un système de coupe,
**caractérisé en ce que** l'étape de mise en portions comprend le fait de pousser vers le bas chaque portion découpée par injection d'un fluide sous pression réalisée par des moyens d'éjection qui comprennent au moins un canal inférieur formé dans le système de coupe, ledit canal débouchant par un orifice inférieur sur une surface inférieure dudit système de coupe.

14. Procédé selon la revendication 13, **caractérisé en ce que** chaque portion coupée et poussée est guidée verticalement vers le bas.

15. Procédé selon la revendication 13 ou 14, **caractérisé en ce que** les portions découpées et poussées sont récupérées pour être chargées dans des barquettes de conditionnement.

16. Procédé selon la revendication 15, **caractérisé en ce que** chaque portion découpée et poussée est récupérée dans une alvéole d'une barquette à alvéoles.

17. Procédé selon l'une des revendications 15 ou 16, **caractérisé en ce qu'**il comprend la fabrication de plusieurs boudins continus de produit alimentaire, les parties d'extrémité desdits boudins pendant librement, sensiblement verticalement, en étant décalées les unes des autres perpendiculairement à une direction d'avancement de barquettes de sorte que les portions soient disposées en rangées dans les barquettes, les portions d'une même rangée dans une barquette étant obtenue par découpe du même boudin.

## Patentansprüche

1. Maschine zur Herstellung von Portionen eines Lebensmittelprodukts, im Speziellen von Fleischbällchen, Folgendes umfassend
- eine Extrusionsvorrichtung (1), die imstande ist, einen fortlaufenden Wurststrang in eine vertikale Richtung auszugeben,
- eine Portioniervorrichtung, zumindest ein Schneidsystem (3, 103) umfassend, wobei das besagte Schneidsystem Schneidelemente (30, 130) umfasst, die imstande sind, quer zur besagten vertikalen Richtung zwischen einer offenen Position, in welcher der Wurststrang zwischen den besagten Schneidelementen hindurchläuft, und einer geschlossenen Position verschoben zu werden, um den Wurststrang zu schneiden und Portionen (P) eines Lebensmittelprodukts zu bilden,
wobei jedes Schneidsystem darüber hinaus Auswurfmittel (5, 105) umfasst, die imstande sind, die Portionen (P) der besagten Schneidelemente nach unten auszuwerfen,
**dadurch gekennzeichnet, dass** die Auswurfmittel zumindest einen unteren Kanal (5, 105) umfassen, der im Gehäuse eines Schneidelements (30, 130) gebildet wird, wobei der besagte Kanal über eine untere Öffnung (51, 151) in eine untere Fläche (32a, 132a) des besagten Schneidelements mündet, und dadurch, dass der besagte zumindest eine untere Kanal (5, 105) imstande ist, in eine Fluidverbindung mit einer unter Druck stehenden Flüssigkeit gebracht zu werden, um eine unter Druck stehende Flüssigkeit zu injizieren.

2. Maschine nach Anspruch 1, **dadurch gekennzeichnet, dass** jedes Schneidsystem zumindest einen oberen Kanal (109) umfasst, der im Gehäuse eines Schneidelements (130) gebildet wird, wobei der besagte Kanal über eine obere Öffnung (191) in eine obere Fläche (132a) des besagten Schneidelements mündet, und imstande ist, in eine Fluidverbindung mit einer unter Druck stehenden Flüssigkeit gebracht zu werden, um durch die besagte obere Öffnung eine unter Druck stehenden Flüssigkeit zu injizieren.

3. Maschine nach einem der Ansprüche 1 bis 2, **dadurch gekennzeichnet, dass** das Schneidsystem (3, 103) zumindest drei Schneidelemente (30, 130) umfasst, die im Umfang angeordnet sind, und in gleitendem Kontakt miteinander angeordnet sind, um zwischen sich einen zentralen Durchlass zu bilden, wobei die besagten Schneidelemente imstande sind, horizontal zwischen der offenen und der geschlossenen Position verschoben zu werden, um den besagten Durchlass progressiv zu schließen und zu öffnen, um die besagten Portionen zu bilden.

4. Maschine nach Anspruch 3, **dadurch gekennzeichnet, dass** die besagten Schneidelemente (30, 130) geneigte untere Flächen (32a) umfassen, die in der geschlossenen Position einen unteren Formgebungsabdruck bilden.

5. Maschine nach Anspruch 4, **dadurch gekennzeichnet, dass** jeder untere Kanal (5, 105) über eine Öffnung (51, 151) in die geneigte untere Fläche (32a, 132a) eines Schneidelements mündet.

6. Maschine nach Anspruch 2, **dadurch gekennzeichnet, dass** die Schneidelemente geneigte obere Flächen (51a, 151a) umfassen, die in der geschlossenen Position einen oberen Formgebungsabdruck bilden, wobei jeder obere Kanal (109) über eine obere Öffnung (191) in die geneigte obere Fläche (131a) eines Schneidelements mündet.

7. Maschine nach einem der Ansprüche 1 bis 6, **dadurch gekennzeichnet, dass** die Extrusionsvorrichtung zumindest einen Extrusionskopf (11) umfasst, der imstande ist, fortlaufend einen fortlaufenden Wurststrang in eine vertikale Richtung auszugeben, der oder die Extrusionsköpfe entsprechend einer Hin- und Herbewegung in die vertikale Richtung zwischen einer unteren Position und einer oberen Position beweglich montiert sind, wobei die Hin- und Herbewegung der besagten Extrusionsköpfe und die Bewegung der Schneidelemente zwischen ihrer geschlossenen Position und ihrer offenen Position synchronisiert sind, sodass die Extrusionsköpfe in der unteren Position sind, wenn die Schneidsysteme in der offenen Position sind.

8. Maschine nach einem der Ansprüche 1 bis 7, **dadurch gekennzeichnet, dass** die Portioniervorrichtung darüber hinaus Führungsmittel (8) umfasst, die unter jedem Schneidsystem (3, 103) angeordnet sind, um den vertikalen Sturz einer jeden aus den Schneidelementen ausgeworfenen Portion zu führen.

9. Maschine nach einem der Ansprüche 1 bis 8, **dadurch gekennzeichnet, dass** sie darüber hinaus eine Auffangvorrichtung (2) umfasst, die unterhalb der Portioniervorrichtung angeordnet ist, um die Portionen aufzufangen, wobei die besagte Auffangvorrichtung ein Förderband umfasst, das imstande ist, auf seinem oberen Trum Schalen (B) zum Aufnehmen der Portionen aufzunehmen, und die besagten Schalen in eine Vortriebsrichtung (F) zu befördern.

10. Maschine nach Anspruch 9, **dadurch gekennzeichnet, dass** die Extrusionsvorrichtung zumindest zwei Extrusionsköpfe (11) umfasst, die imstande sind, jeweils fortlaufend einen fortlaufenden Wurststrang in eine vertikale Richtung auszugeben, die vertikalen Hauptachsen (A₁, A₂, A₃) der besagten Extrusionsköpfe querlaufend zueinander in die querlaufende Richtung, senkrecht zur Vortriebsrichtung (F) des Förderbandes (2), versetzt sind, wobei die besagte Portioniervorrichtung ein Schneidsystem (3, 130) umfasst, das einem jeden Extrusionskopf zugeordnet ist, wobei die besagten Schneidsysteme querlaufend in die querlaufende Richtung senkrecht zur Vortriebsrichtung des Förderbandes zueinander versetzt sind.

11. Maschine nach Anspruch 10, **dadurch gekennzeichnet, dass** die Hauptachsen (A₁, A₂, A₃) der Extrusionsköpfe (11) und ihre zugeordneten Schneidsysteme (3, 130) in Längsrichtung, in die Vortriebsrichtung (F) des Förderbandes, zueinander versetzt sind.

12. Einheit, eine Maschine nach einem der Ansprüche 9 bis 11 und Konditionierschalen (B) umfassend, wobei jede Schale Fächer umfasst, die in Reihen zur Aufnahme einer Portion angeordnet sind, wobei die besagten Schalen auf dem Förderband angeordnet sind, sodass die Schalenreihen in Längsrichtung parallel zur Vortriebsrichtung (F) des Förderbandes (2) angeordnet sind, wobei die Fächer einer selben Reihe jene Portionen aufnehmen, die von einem selben Schneidsystem geschnitten worden sind.

13. Verfahren zur Herstellung von Portionen eines Lebensmittelprodukts, Folgendes umfassend
a) die Herstellung zumindest eines fortlaufenden Wurststranges eines Lebensmittelprodukts indem man den Endabschnitt des besagten Wurststrangs frei, im Wesentlichen vertikal hängen lässt,
b) die Portionierung des besagten Wurststrangs durch die Durchführung von Zuschnitten des besagten hängenden Endabschnitts, um mithilfe eines Schneidsystems Portionen zu bilden, die sich vom Wurststrang trennen,
**dadurch gekennzeichnet, dass** der Schritt des Portionierens die Tatsache umfasst, jede zugeschnittene Portion durch Injizieren einer unter Druck stehenden Flüssigkeit nach unten zu drücken, die durch Auswurfmittel erzeigt wird, die zumindest einen unteren Kanal umfassen, der im Schneidsystem gebildet wird, wobei der besagte Kanal über eine untere Öffnung in eine untere Fläche des besagten Schneidsystems mündet.

14. Verfahren nach Anspruch 13, **dadurch gekennzeichnet, dass** jede geschnittene und geschobene Portion vertikal nach unten geführt wird.

15. Verfahren nach Anspruch 13 oder 14, **dadurch gekennzeichnet, dass** die geschnittenen und geschobenen Portionen aufgefangen werden, um in die Konditionierschalen geladen zu werden.

16. Verfahren nach Anspruch 15, **dadurch gekennzeichnet, dass** jede geschnittene und geschobene Portion in einem Fach einer Fächerschale aufgefangen wird.

17. Verfahren nach einem der Ansprüche 15 oder 16, **dadurch gekennzeichnet, dass** es die Herstellung mehrerer fortlaufender Wurstsstränge eines Lebensmittelprodukts umfasst, wobei die Endabschnitte der besagten Wurststränge frei und im Wesentlichen vertikal hängen, und senkrecht zu einer Vortriebsrichtung von Schalen zueinander verschoben sind, sodass die Portionen in Reihen in den Schalen angeordnet sind, wobei man die Portionen einer selben Reihe in einer Schale durch Zuschneiden desselben Wurststrangs erhält.

## Claims

1. Machine for the production of portions of a food product, in particular meatballs, comprising
- an extrusion device (1) suitable for delivering, preferably continuously, a continuous strand in a vertical direction,
- a portioning device comprising at least one cutting system (3, 103), said cutting system comprising cutting elements (30, 130) suitable for being moved transversally to said vertical direction between an open position wherein the strand passes between said cutting elements and a closed position for cutting the strand and forming portions (P) of the food product,
each cutting system further comprising ejection means (5, 105) suitable for ejecting the portions (P) downwards from said cutting elements,
**characterised in that** the ejection means comprise at least one lower channel (5, 105) formed in the body of a cutting element (30, 130), said channel opening via a lower orifice (51, 151) onto a lower surface (32a, 132a) of said cutting element, and **in that** the said at least one lower channel (5, 105) is suitable for fluidic connection with a compressed fluid, for injecting compressed fluid.

2. Machine according to claim 1, **characterised in that** each cutting system comprises at least one upper injection channel (109) formed in the body of a cutting element (130), said channel opening via an upper orifice (191) onto an upper surface (132a) of said cutting element and being suitable for fluidic connection with a compressed fluid, for injecting compressed fluid via said upper orifice.

3. Machine according to one of claims 1 to 2, **characterised in that** the cutting system (3, 103) comprises at least three cutting elements (30, 130) arranged circumferentially, and arranged in sliding contact with each other in order to form a central passage together, said cutting elements being suitable for being moved horizontally, between the open position and the closed position in order to progressively close and open said passage so as to form said portions.

4. Machine according to claim 3, **characterised in that** said cutting elements (30, 130) comprise lower inclined surfaces (32a), forming in the closed position a lower shaping cavity.

5. Machine according to claim 4, **characterised in that** each lower channel (5, 105) opens via an orifice (51, 151) onto the inclined lower surface (32a, 132a) of a cutting element.

6. Machine according to claim 2, **characterised in that** the cutting elements comprise upper inclined surfaces (51a, 151a), forming in the closed position an upper shaping cavity, each upper channel (109) opens via an upper orifice (191) onto the inclined upper surface (131a) of a cutting element.

7. Machine according to one of claims 1 to 6, **characterised in that** the extrusion device comprises at least one extrusion head (11) suitable for continuously delivering a continuous strand in a vertical direction, the extrusion head(s) are movably mounted vertically according to a to-and-fro movement between a low position and a high position, the to-and-fro movement of said extrusion heads and the movement of the cutting elements between the closed position thereof and the open position thereof being synchronised, such that the extrusion heads are in the low position when the cutting systems are in the open position.

8. Machine according to one of claims 1 to 7, **characterised in that** the portioning device further comprises guiding means (8) arranged under each cutting system (3, 103) in order to guide the vertical drop of each portion ejected from the cutting elements.

9. Machine according to one of claims 1 to 8, **characterised in that** it further comprises a retrieval device (2) arranged below the portioning device to retrieve the portions, said retrieval device comprises a conveyor suitable for receiving on the upper belt thereof trays (B) for receiving portions, and conveying said trays in a feed direction (F).

10. Machine according to claim 9, **characterised in that** the extrusion device comprises at least two extrusion heads (11) suitable for continuously delivering a continuous strand in a vertical direction, the main vertical axes (A₁, A₂, A₃) of said extrusion heads are transversally offset from each other, in the transversal direction which is perpendicular to the feed direction (F) of the conveyor (2), said portioning device comprising a cutting system (3, 130) associated with each extrusion head, said cutting systems being transversally offset from each other in the transversal direction perpendicular to the conveyor feed direction.

11. Machine according to claim 10, **characterised in that** the main axes (A₁, A₂, A₃) of the extrusion heads (11) and the associated cutting systems (3, 130) thereof are longitudinally offset from each other in the conveyor feed direction (F).

12. Assembly comprising a machine according to one of claims 9 to 11 and packaging trays (B), each tray comprising compartments arranged in rows for receiving a portion, said trays being arranged on the conveyor such that the rows of compartments are arranged longitudinally parallel to the feed direction (F) of the conveyor (2), the compartments from the same row receiving portions cut by the same cutting system.

13. Method for the production of portions of a food product comprising
a) producing at least one continuous strand of a food product, by freely hanging, substantially vertically, the end part of said strand,
b) portioning said strand by cutting said hanging end part, by cutting elements, so as to form portions detached from the strand, using a cutting system,
**characterised in that** the portioning step comprises downward pushing of each cut portion by injecting a compressed fluid using ejection means which comprise at least one lower channel formed in the body of a cutting element, said channel opening via a lower orifice onto a lower surface of said cutting element.

14. Method according to claim 13, **characterised in that** each cut and pushed portion is guided vertically downwards.

15. Method according to claim 13 or 14, **characterised in that** the cut and pushed portions are retrieved in order to be loaded into packaging trays.

16. Method according to claim 15, **characterised in that** each cut and pushed portion is retrieved in a compartment of a tray including compartments.

17. Method according to one of claims 15 or 16, **characterised in that** it comprises the production of a plurality of continuous strands of a food product, the end parts of said strands hanging freely, substantially vertically, offset in relation to each other perpendicular to a tray feed direction such that the portions are arranged in rows in the trays, the portions of the same row in a tray being obtained by cutting the same strand.
